(19) Europäisches Patentamt / European Patent Office / Office européen des brevets

(11) **EP 4 635 717 A1**

(12) **EUROPEAN PATENT APPLICATION**

(43) Date of publication:
22.10.2025 Bulletin 2025/43

(51) International Patent Classification (IPC):
*B29C 64/106* (2017.01)     *B29C 64/393* (2017.01)
*B33Y 10/00* (2015.01)     *B33Y 50/02* (2015.01)

(21) Application number: 24170639.9

(22) Date of filing: 16.04.2024

(52) Cooperative Patent Classification (CPC):
**B29C 64/106; B29C 64/393; B33Y 10/00;
B33Y 50/02;** B29C 64/209; B29C 64/336;
B33Y 30/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Chromatic 3D Materials Inc.
Golden Valley, MN 55427 (US)**

(72) Inventors:
• **Benson, Garth William
St. Paul, 55104 (US)**
• **Ch'ng, Sherilyn Hui Ern
Minneapolis, 55414 (US)**
• **Hoffmann, Matthias
52080 Aachen (DE)**
• **Leibig, Cora
Maple Grove, 55311 (US)**

(74) Representative: **Lelkes, Robert
Vorhoelzerstraße 21
81477 München (DE)**

(54) **SYSTEM AND METHOD FOR PRINTING THREE-DIMENSIONAL OBJECTS COMPRISING A THERMOSET MATERIAL HAVING A SELECTED SMOOTHNESS OVER MULTIPLE STACKED LAYERS**

(57)     Systems and methods are disclosed for making thermoset objects via reactive extrusion having a selected smoothness over multiple stacked layers. The controller of the system is configured to print, or the method comprises printing, a stack of layers wherein the deposition rate and the elapsed time per layer are maintained in accordance with certain formulae while depositing multiple layers of the stack of layers. Controlling the deposition rate and elapsed time according to the formulae provides a means for selecting the degree of smoothness of the surface of the printed 3D object and for obtaining printed objects having very smooth surfaces.

**Fig. 8**

**Description**

**BACKGROUND OF THE INVENTION**

**Field of the invention**

The present invention relates to systems and methods for printing three-dimensional objects using a thermosettable material.

**Technical background**

Systems and methods for printing three-dimensional objects comprising a thermosettable material are known. Examples include the systems and methods disclosed in U.S. patent nos. 10,639,842, 11,065,816, 11,254,047, and 11,724,458. In such systems and methods, three-dimensional printed objects are typically produced by printing thermosettable material in multiple layers corresponding to a series of slices through the shape of a predetermined three-dimensional object design.

The layers are generally formed by extruding a partially cured thermosettable material through a nozzle while changing the relative position between the nozzle and the position of the material deposited to form a given layer. Layers of partially cured thermosettable material are printed sequentially on top of previously deposited layers of partially cured thermosettable material according to the predetermined three-dimensional design to form a stack of layers in which the previously deposited layers of partially cured thermosettable material support, and provide a substrate for, the next sequential layer to be printed. The stack of layers may be printed separately from each other by interrupting extrusion of the thermosettable material from the nozzle between completing a layer and printing the next layer in the sequence of layers in the stack of layers or the stack of layers may be printed by continuously printing partially cured thermosettable material while adjusting the height of the nozzle to accommodate the change in height due to the presence of the previously printed layer of partially cured thermosettable material.

The partially cured thermosettable material is in a viscous fluid state when depositing the partially cured thermosettable material from the nozzle onto the previously deposited layer of partially cured thermosettable material or a substrate. The cross-sectional shape of the partially cured thermosettable material as it leaves the extrusion nozzle has a generally circular or oval shape. As the partially cured thermosettable material makes contact with the surface of a previously deposited layer of partially cured thermoplastic material or another substrate, the cross-section of the deposited partially cured thermosettable material is flattened where the partially cured thermosettable material makes contact with the previously deposited layer of partially cured thermosettable material or other substrate to form a convex bead of partially cured thermosettable material on the previously deposited layer of partially cured thermosettable material or other substrate.

When the partially cured thermosettable material is printed in a substantially horizontal direction, partially cured thermosettable material deposited substantially horizontally adjacent to partially cured thermosettable material previously deposited in the same layer may be printed such that the bead coalesces with the previously deposited thermosettable material to form a continuous smooth layer of thermosettable material in the horizontal direction.

However, printing the thermosettable material on top of a previously printed partially cured thermosettable material when the previously printed partially cured thermosettable material is capable of coalescence with the freshly deposited partially reacted thermosettable material can result in a decrease in the height of the stack and reduced control over the shape of the printed object relative to the predetermined three-dimensional object design, so that it has been generally assumed that subsequent layers should be deposited after the previously deposited layers are in at least a non-fluid gel state due to the reaction between the components of the partially reacted mixture. When sufficient time is permitted to elapse between deposition of a layer of partially cured thermosettable material onto a previously deposited layer of partially cured thermosettable material and deposition of the previously deposited layer of partially cured thermosettable material to prevent coalescence between stacked layers prior to deposition of the next layer of partially cured thermosettable material, the beads of thermosettable material at the surface of the printed object tend to form a surface having ridges in a direction transverse to the height direction of the stack of layers due to the beads partially retaining their cross-sectional shape. This problem has presented a challenge for printing three-dimensional thermoset products having a smooth surface in the height direction.

There are also situations in which varying the smoothness of the printed object in the stacked layer direction may be desired for aesthetic or functional reasons. Functional reasons include, for example, providing certain portions of a printed object with ridges to facilitate gripping the printed object, to increase or reduce friction with materials contacting the printed object, or to provide for flexibility in certain spatial directions while resisting indentation or bending in other spatial directions. Control over smoothness in the height direction has been an unmet need in the field of 3D printing via reactive extrusion.

These and other problems related to three-dimensional printing via reactive extrusion are solved by the present invention as described and claimed herein.

## SUMMARY OF THE INVENTION

In one aspect, the present invention solves the foregoing problems by providing a system for printing a three-dimensional object comprising a thermoset material having a selected smoothness over multiple stacked layers via reactive extrusion comprising:

a mixing chamber for mixing at least two reactive components to form a partially reacted mixture of the at least two reactive components,

a first pump in fluid communication with the mixing chamber for pumping a first composition comprising one or more reactive components into the mixing chamber at a controllable pumping rate,

a second pump in fluid communication with the mixing chamber for pumping a second composition into the mixing chamber at a controllable pumping rate, wherein the second composition comprises one or more reactive components capable of reacting with the one or more reactive components of the first composition,

a downwardly-oriented nozzle having a first end connected to, and in fluid communication with, the mixing chamber and a second end below the first end for extruding the partially reacted mixture received from the mixing chamber,

a dynamic positioning apparatus capable of providing controllable relative movement in three dimensions between the second end of the nozzle and coordinates associated with printing a three-dimensional object according to a three-dimensional object design and

a controller comprising one or more digital electronic processors, wherein the controller is operably coupled with (a) the first pump and the second pump to control the pumping rates of the first pump and the second pump and (b) the dynamic positioning apparatus to control relative movement in three dimensions between the second end of the nozzle and the coordinates associated with printing a three-dimensional object according to a three-dimensional object design,

wherein the controller is configured to print a three-dimensional object comprising a stack of layers of partially reacted thermosettable material by depositing each layer of the partially reacted thermosettable material on top of a previously deposited layer of the partially reacted thermosettable material to form the stack of layers having a height in a vertical direction according to a three-dimensional object design, wherein each layer of the partially reacted mixture is deposited on a previously deposited layer of the stack of layers at deposition rate (dr) in grams per millimeter relative movement between the nozzle and the previously deposited layer of the partially reacted mixture and at elapsed time (t) in seconds between the time of extrusion of the previously deposited layer at a location in the previously deposited layer and the time of deposition of the partially reacted mixture onto the previously deposited layer at the same location to form the next subsequent layer in the stack of layers, wherein the deposition rate (dr) and the elapsed time (t) are maintained in accordance with formula (I) or formula (II), or both formula (I) and formula (II), while depositing multiple layers of the stack of layers:

$$-0.75 * \ln(dr * t^3) = K1 \qquad (I)$$

or

$$(dr * t) / w = K2 \qquad (II),$$

wherein

dr represents the rate of deposition of the partially reacted mixture in grams per millimeter,

t represents the elapsed time in seconds,

w represents the maximum cross-sectional post gel time width in millimeters of a bead of extruded partially reacted mixture deposited according to the three-dimensional object design measured after expiration of the gel time of the extruded partially reacted mixture, wherein the gel time is measured from the time of deposition of the bead.

K1 represents a value selected to correspond to the degree of desired smoothness over multiple stacked layers and

K2 represents a value selected to correspond to the degree of desired smoothness over multiple stacked layers for a predetermined post gel time width (w) of the deposited partially reacted mixture.

In another aspect, the present invention solves the above problems by providing a method for printing a three-dimensional object comprising a thermoset material having a selected smoothness over multiple stacked layers via reactive extrusion comprising:

(a) Mixing a first composition comprising one or more reactive components with a second composition comprising one or more reactive components capable of reacting with the one or more reactive components of the first composition to form a partially reacted mixture and

(b) Extruding the partially reacted mixture formed in step (a) through a downwardly oriented nozzle onto a substrate while causing relative movement between the downwardly oriented nozzle and the extruded partially reacted mixture deposited on the substrate to form a three-dimensional object,

wherein step (b) comprises depositing the partially reacted mixture extruded in step (b) in the form of a bead of partially reacted mixture deposited on a previously deposited layer such that each layer of the partially reacted thermosettable material is deposited on top of a previously deposited layer of the partially reacted thermosettable material to form a stack of layers having a height in a vertical direction according to a three-dimensional object design, wherein each layer of the partially reacted mixture is deposited on a previously deposited layer of the stack of layers at deposition rate (dr) in grams per millimeter relative movement between the downwardly-oriented nozzle and the previously deposited layer of the partially reacted mixture and at elapsed time (t) in seconds between the time of extrusion of the previously deposited layer at a location in the previously deposited layer and the time of deposition of the partially reacted mixture during deposition onto the previously deposited layer at the same location to form the next subsequent layer in the stack of layers, wherein the deposition rate (dr) and the elapsed time (t) are maintained in accordance with formula (I) or formula (II), or both formula (I) and formula (II), while depositing multiple layers of the stack of layers:

$$-0.75 * \ln(dr * t^3) = K1 \qquad (I)$$

or

$$(dr * t) / w = K2 \qquad (II),$$

wherein

dr represents the rate of deposition of the partially reacted mixture in grams per millimeter,
t represents the elapsed time in seconds,
w represents the maximum cross-sectional post gel time width in millimeters of a bead of extruded partially reacted mixture deposited according to the three-dimensional object design measured after expiration of the gel time of the extruded partially reacted mixture, wherein the gel time is measured from the time of deposition of the bead,
K1 represents a value selected to correspond to the degree of desired smoothness over multiple stacked layers and
K2 represents a value selected to correspond to the degree of desired smoothness over multiple stacked layers for a predetermined post gel time width of the deposited partially reacted mixture after expiration of the gel time of the deposited partially reacted mixture.

**BRIEF DESCRIPTION OF THE DRAWINGS**

Fig. 1 is a photograph of a standard M3 threaded bolt used for comparison superimposed over a cylinder printed via reactive extrusion representing smoothness level 1.

Fig. 2 is a photograph of a standard M3 threaded bolt used for comparison superimposed over a cylinder printed via reactive extrusion representing smoothness level 2.

Fig. 3 is a photograph of a standard M3 threaded bolt used for comparison superimposed over a cylinder printed via reactive extrusion representing smoothness level 3.

Fig. 4 is a photograph of a standard M3 threaded bolt used for comparison superimposed over a cylinder printed via reactive extrusion representing smoothness level 4.

Fig. 5 is a photograph of a standard M3 threaded bolt used for comparison superimposed over a cylinder printed via reactive extrusion representing smoothness level 5.

Fig. 6 is a photograph of a standard M3 threaded bolt used for comparison superimposed over a cylinder printed via reactive extrusion representing smoothness level 6.

Fig. 7 is a photograph of a standard M3 threaded bolt used for comparison superimposed over a cylinder printed via reactive extrusion representing smoothness level 7.

Fig. 8 is a photograph of a standard M3 threaded bolt used for comparison superimposed over a cylinder printed via reactive extrusion representing smoothness level 8.

## DETAILED DESCRIPTION OF THE INVENTION

Definitions

The abbreviation "3D" stands for "three-dimensional".

The term "bead" means the partially reacted mixture which has been deposited on a substrate capable of supporting the deposited partially reacted mixture, such as a platform or a previously deposited layer of the partially reacted mixture, during relative movement between the nozzle and a substrate.

The expression "bead height" means the maximum vertical cross-sectional height of a bead on a substrate measured at the time of deposition. When an object comprises one or more vertically stacked beads, the bead height is the height of the vertically stacked bead(s) divided by the number of layers in the stacked bead(s) for a given layer resolution. The one or more vertically stacked beads may be (a) multiple beads formed by discontinuous or separate extrusion of the partially reacted mixture or (b) a single continuous bead formed by continuous extrusion, wherein the bead is extruded onto a previously extruded portion of the same bead.

The expression "bead width" means the maximum horizontal cross-sectional width of a bead on a substrate measured at the time of deposition.

The expression "bead aspect ratio" means the bead width of a given bead divided by the bead height of the same bead at the same location measured after bead deposition and prior to elapsed time (t) in the absence of contact with horizontally adjacent materials, such as horizontally adjacent beads. The bead aspect ratio is preferably measured for beads extruded under anticipated 3D printing extrusion conditions to facilitate calculation of a print path for printing a 3D object according to a 3D object design having a predetermined print resolution.

The expression "deposition rate" (dr) refers to the amount of partially reacted mixture extruded from the nozzle onto a previously deposited bead or layer of partially reacted mixture during relative movement between the nozzle and the previously deposited bead or layer of partially reacted mixture at the location of deposition expressed in grams (g) per millimeter (mm). A deposition rate based on volume per millimeter can be converted to grams per millimeter by multiplying the volume in cubic millimeter per millimeter deposited with the density of the partially reacted mixture in grams per cubic millimeter.

The expression "elapsed time" means a time period (t) in seconds between the time of extrusion of the previously deposited layer and the time of deposition of a bead of the partially reacted mixture onto the previously deposited layer at a location of the previously deposited layer at which a bead of the partially reacted mixture is being deposited. When the previous layer comprises more than one horizontally adjacent bead, the elapsed time is the time period between the time of extrusion of the partially reacted mixture forming the previously deposited layer at the location of deposition of a bead onto the previously deposited layer at the same bead location.

The expression "flow rate" means the amount of partially reacted mixture extruded from a nozzle connected to a mixing chamber for mixing reactive components to form the partially reacted mixture over a time period of one second expressed as grams per second (g/s).

The expression "gel time" means the time period between the time at which the extruded partially reacted mixture is deposited onto a substrate and the time when the physical state of the deposited partially reacted mixture changes from a fluid to a gel according to the American Society for Testing and Materials (ASTM) method D2471-99, paras. 7.7 and 7.8 modified as follows. The gel time is preferably measured at 20°C by extruding a small sample of the partially reacted mixture having a weight in the range from 2 to 10 grams from the nozzle of a 3D printing system onto a substrate, measuring elapsed time from the moment that extrusion of the sample onto the substrate is completed, repeatedly probing the center surface of the extruded sample with an applicator stick perpendicular to the sample surface at time intervals of not greater than 5 seconds while observing whether or not a strand of the extruded sample sticking to the applicator when removing the applicator from the extruded sample breaks when moving the end of the applicator attached to the strand a couple centimeters away from the sample, and stopping the elapsed time measurement when the strand of the extruded sample sticking to the applicator breaks while moving the applicator away from the extruded sample. The time difference between deposition of the sample and breakage of the strand of extruded sample is the gel time.

The term "layer" refers to a partially reacted mixture deposited as one or more beads onto a substrate via movement of the nozzle relative to the substrate, wherein the substrate may be a platform for printing a three-dimensional object or a previously deposited layer of the partially reacted mixture to form a stack of layers. The stack of layers may be formed formed from a single continuous bead or multiple beads. The stack of layers may be printed in accordance with a three-dimensional object design.

The expression "mixing chamber" refers to a chamber capable of mixing reactive components while the reactive components are introduced into the mixing chamber to form a partially reacted mixture which flows out of the mixing chamber during mixing. The mixing chamber preferably has mixing elements for directing the flow of the reactive components in the mixing chamber while the reactive components are introduced into the mixing chamber to intersperse the reactive components with each other. The mixing elements may be moving parts capable of interspersing the reactive components with each other within the mixing chamber or they may be multiple static elements which cause mixing by directing and redirecting the flow of reactive components introduced into the mixing chamber to intermix the reactive components with each other.

The expression "partially reacted mixture" means a flowable mixture of reactive components, which is extruded from the nozzle connected to a mixing chamber and which is capable of curing to form a crosslinked thermoset material after extrusion.

The term "smoothness" as used herein refers to the degree to which a surface of a stack of layers of a partially reacted thermosettable mixture is physically uneven relative to the contour of the 3D object design in a direction traversing multiple layers of the stack of layers in a height direction due to the presence of ridges in the surface of the stack of layers corresponding to the layers of the partially reacted thermosettable mixure in the stack of layers. The surface over which smoothness is determined extends over the periphery of multiple layers of a stack of layers of an object printed via three-dimensional printing. The expression "degree of desired smoothness" refers to a predetermined smoothness corresponding to a K1 value or a K2 value determined by a correlation between smoothness and K1 or K2 values, respectively. In a preferred embodiment, the degree of smoothness is based on a correlation with, or in a preferred embodiment is the same as, a smoothness level.

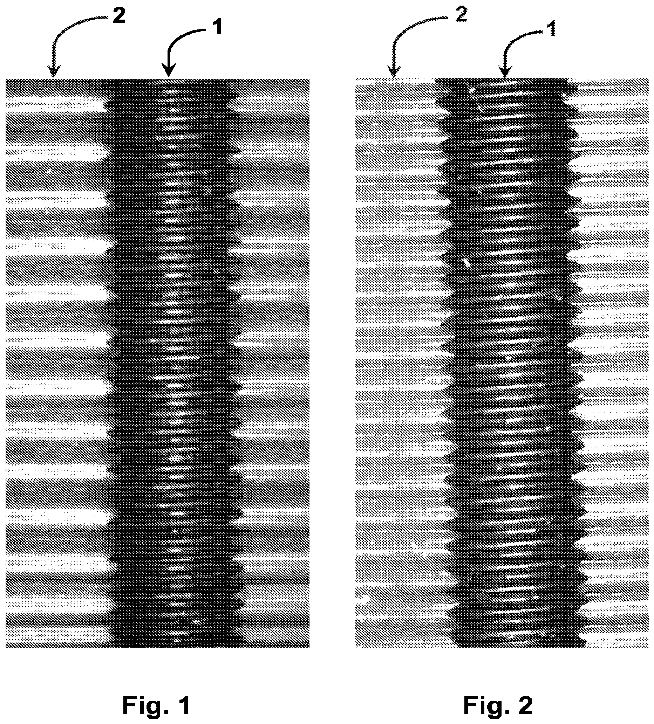

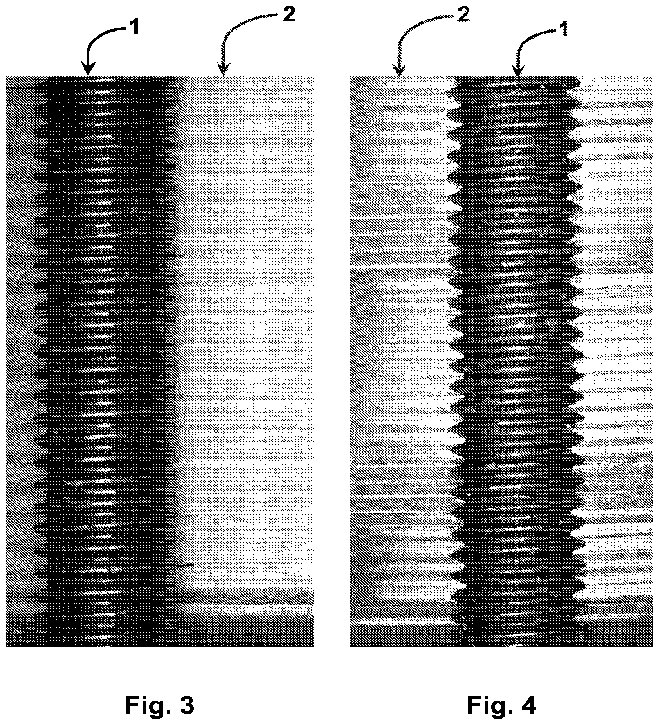

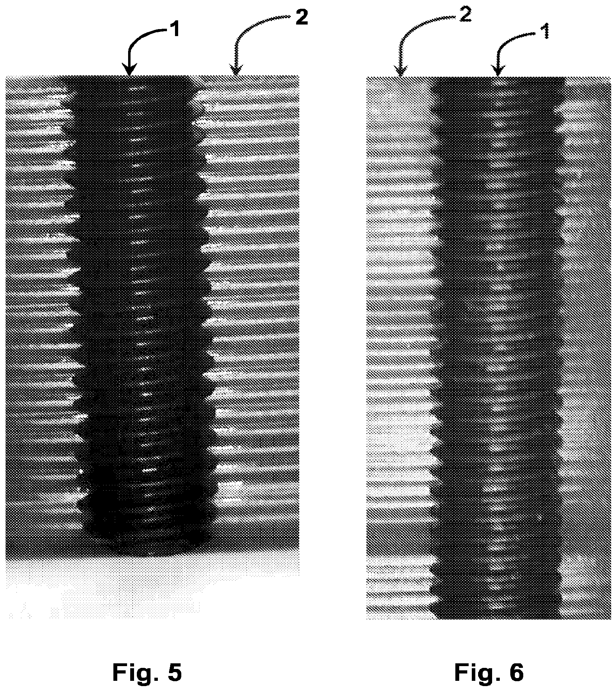

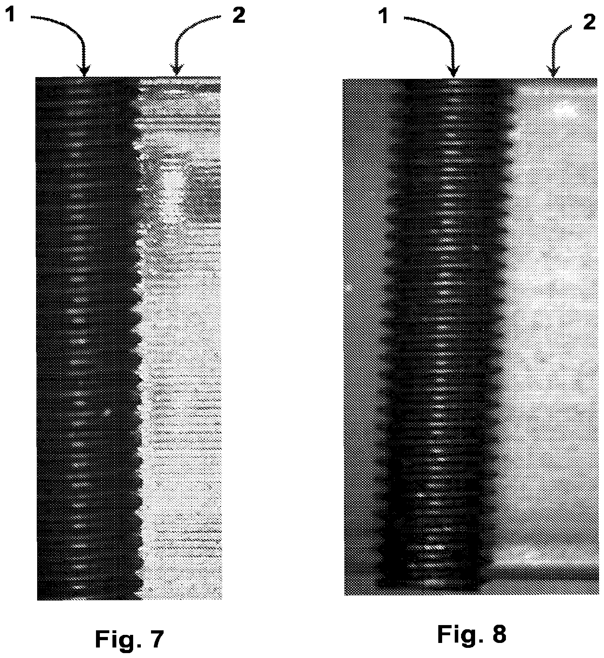

The expression "smoothness level" refers to a degree of smoothness which visually corresponds most closely to one of smoothness levels 1 to 8 shown in Figs. 1 to 8, respectively, determined after expiration of the gel time of, more preferably after curing, the entire stack of layers for which the smoothness level is determined.

The term "movement" as used herein refer to a change in position of a nozzle for extruding a partially reacted mixture relative to a location on a substrate onto which the partially reacted mixture is to be extruded at a time at which the nozzle deposits the partially reacted mixture onto the substrate. The change in position can be caused by moving the position of the nozzle, moving the position of the substrate, or moving the position of the nozzle and the position of the substrate relative to each other simultaneously. The nozzle is preferably moved by displacement of the position of the nozzle relative to the substrate over time. The substrate may be moved by displacement of the substrate location, by rotation of the substrate about an axis, wherein the axis may have various orientations, such as vertical or horizontal, or by a combination of displacement of the location of the substrate and rotation of the substrate, over time. In the context of this invention, the movement preferably comprises a horizontal vector at the location of deposition for the purpose of depositing a layer of the partially reacted mixture onto the substrate, wherein the horizontal vector is greater than any vertical vector. The substrate may be a previously deposited layer or bead of the partially reacted mixture or may be another material capable of supporting the extruded partially reacted mixture.

The expressions "rate of movement" and "movement rate" refer to the rate of movement in distance travelled per unit time between the nozzle and the substrate at the location of deposition of the partially reacted mixture onto the substrate expressed in millimeters per second (mm/s) or millimeters per minute (mm/min.).

The expression "post gel time width" (w) refers to the maximum cross-sectional width (i.e., the maximum width transverse to the direction of movement during deposition) in millimeters of a bead of extruded partially reacted mixture deposited according to the three-dimensional object design measured after expiration of the gel time, such as after post-curing, of the extruded partially reacted mixture, wherein the gel time is measured from the time of deposition of the bead.

The post gel time width (w) is preferably predetermined for printing a 3D object according to a 3D object design and anticipated based on one or more correlations between the post gel time width (w) and the print parameters and conditions to be used to print a given 3D object.

Preferred embodiments

The mixing step (a) of the method according to this invention is preferably carried out by providing a system comprising a mixing chamber and simultaneously introducing at least two reactive components into the mixer. For the sake of simplicity and cost savings, static mixers may be used, which generally consist of a tortuous passage designed to intermingle multiple fluid substances passing through the passage until the substances are homogeneously mixed. Static mixers are known and available from Adchem GmbH located in Wendelstein, Germany, and Misch- und Dosiertechnik GmbH located in Waldmohr, Germany. Preferred are helix-type static mixers having at least 12 fixed mixing elements and a conical extrusion end.

The reactive components are preferably introduced into the mixing chamber by pumping a first composition comprising one or more reactive components into the mixer with a first pump separately from reactive components capable of reacting with the one or more reactive components in the first composition while simultaneously pumping into the mixing chamber a second composition comprising one or more reactive components capable of reacting with the one or more reactive components in the first composition. The volumetric pumping rates of the respective pumps are preferably adjusted, or controlled, to obtain a desired ratio of equivalents between the functional groups of the respective reactive components and to provide a desired flow rate from the nozzle connected to the mixing chamber.

The total combined flow rate of the first pump and the second pump is preferably adjusted, or controlled, to produce a desired flow rate of the partially reacted mixture through the nozzle for carrying out extrusion according to this invention. The flow rate is preferably adjusted, or controlled, to provide a desired residence time of the reactants in the mixer prior to extrusion, which in turn determines the extent to which the reactive components have reacted with each other prior to extrusion. The residence time is selected to be less than the time required to completely react all the reactive functional groups of the respective reactive components introduced into the mixing chamber.

Pumps for pumping formulations containing reactive components at controlled rates are well-known and commercially available from manufacturers such as ViscoTec Pumpen- u. Dosiertechnik GmbH located in Toeging am Inn, Germany.

Preferred nozzles for extrusion of the partially-reacted thermoset material formed in the mixer include tubes and conical shapes having a selected size and shape. In some embodiments, the nozzles have a substantially constant inner circumference from the upper end to the lower end. In other embodiments, the nozzle may have a smaller circumference at the lower end than at the upper end including, but not limited to, a nozzle having a conical shape. The nozzle may be an integral part of the mixing chamber or may be connected with the mixing chamber as a separate component.

The dynamic positioning apparatus preferably comprises mechanical devices capable of modifying the position of the nozzle relative to the 3D object to be printed. In a preferred embodiment, the nozzle is mounted on a robotic arm or on rails having drive systems for positioning the location of the nozzle according to spatial coordinates specified by a controller, whereby the mixing chamber is preferably mounted together with the nozzle on the robotic arm or rails. In the same or a different embodiement, a build platform for depositing the partially reacted mixture in layers to form a 3D object is mounted on a device having drive systems for positioning the build platform relative to the extrusion end of the nozzle, such as rotation of the build platform around an axis of rotation, such as a vertical axis of rotation, a horizontal axis rotation or both vertical and horizontal axes of rotation, such as gimbals, shifting the location of the build platform in a horizontal direction, shifting the location of the build platform in a vertical direction and tilting the build platform around a horizontal axis of rotation, or a combination thereof. The drive systems preferably comprise electrically driven components, wherein the drive system is capable of providing electronic signals to a controller corresponding to the spatial or rotational position of the electronic drive component. Such drive systems are well known. Examples include position control through servo motors used alone or in combination with position detectors.

The controller is preferably an electronic device capable of directing the dynamic positioning device to cause relative movement between the extrusion end of the channel and a build platform while controlling the speed of the first pump and the second pump for conveying the first reactive composition and the second reactive composition, respectively, into the mixing chamber to deposit one or more beads of a partially reacted mixture according to sequential cross-sectional horizontal slices of a 3D object design. The controller preferably comprises an electronic device having digital processors capable of accepting and processing electronic signals from the dynamic positioning apparatus and transmitting electronic signals to the dynamic positioning apparatus and the respective pumps for controlling the dynamic positioning apparatus and the respective pumps. The controller is preferably programmable.

The controller preferably comprises, or is provided with a digital interface or bus operably connected with, a programmable computer capable of providing instructions for depositing beads of partially reacted mixture according to sequential cross-sectional contiguous slices of a 3D object design. The instructions are preferably provided by a programmable digital computer programmed to convert digital representations of the sequential contiguous slices of the 3D object design into actions to be taken by the dynamic positioning device and the first and second pumps. The digital representations of sequential cross-sectional horizontal contiguous slices of a 3D object design, also known as contour data, may be generated from three-dimensional object design files created via computer assisted design (CAD) software, such as SolidWorks™, using known software algorithms.

The controller is preferably provided with instructions for extruding the partially reacted mixture in three-dimensional space according to parameters which include a path for extruding one or more beads of a partially reacted mixture and one or more print parameters such as the flow rate of the partially reacted mixture from the nozzle and the rate of movement in distance over time between the nozzle and the substrate on which the partially reacted mixture is to be extruded at the location of deposition of the partially reacted mixture. The deposition rate of the partially reacted mixture along the extrusion path may be calculated by dividing the flow rate of the partially reacted mixture from the nozzle by the rate of movement between the nozzle and the substrate at the time of deposition of the partially reacted mixture on the substrate. The deposition rate may be increased by increasing the flow rate and/or decreasing the rate of movement or may be decreased by decreasing the flow rate and/or increasing the rate of movement between the nozzle and the substrate.

The controller is preferably also provided with instructions for extruding the partially reacted mixture according to a deposition pattern designed to form a three-dimensional object according to a three-dimensional design by forming a stack of layers, wherein each layer has a predefined shape, such as according to the aforementioned contour data. The instructions for the path of extrusion to form the pattern, or bead path, are preferably based on a calculation of elapsed time between time of extrusion of a given layer of a stack of layers and the time of extrusion of a subsequent layer at the position at which deposition of the layer is taking place. For a given deposition pattern, the elapsed time may be increased by decreasing the rate of movement between the nozzle and the substrate, including interrupting deposition, or decreased by increasing the rate of movement between the nozzle and the substrate. When the deposition pattern varies from layer to layer, the elapsed time for a given rate of movement between the nozzle and the substrate increases or decreases in proportion to the length of the path required to deposit the bead onto the previous layer at the same location. Adjustment of the rate of moveent between the nozzle and the substrate, or interrupting deposition, may be used to compensate for differences in the length of the path required to deposit the bead corresponding to the respective layer.

A compilation of instructions to the controller, or a computer program for generating instructions to the controller, for printing a three-dimensional object according to a three-dimensional object design is preferably generated and stored in a digital storage medium by a programmable computer prior to printing the three-dimensional object.

The deposition rate (dr) of the partially reacted mixture and the elapsed time (t) between deposition of the partially reacted mixture in a layer and deposition of the partially reacted mixture onto the previously deposited partially reacted mixture to form a subsequent layer are maintained within the range according to formula (I) or formula (II), or both formula (I) and formula (II), while depositing multiple layers of the stack of layers.

K1 of formula (I) may be increased or decreased to adjust the smoothness of the stack of layers by adjusting the deposition rate (dr) and/or the elapsed time (t) used to print a three-dimensional object according to a three-dimensional object design. Increasing K1 increases smoothness and decreasing K1 decreases smoothness.

K2 of formula (II) may be increased or decreased to adjust the smoothness of the stack of layers by adjusting the deposition rate (dr) and/or the elapsed time (t) used to print a three-dimensional object according to a three-dimensional object design having a given post gel time width (w). Increasing K2 decreases smoothness and decreasing K2 increases smoothness.

In a preferred embodiment, K1 has a value of at least 1 and/or K2 has a value less than or equal to 0.002, which in some embodiments results in a smoothness level of greater than or equal to 6. When a higher smoothness level is desired, K1 is preferably greater than or equal to 2, more preferably greater than or equal to 2.5, and even more preferably greater than or equal to 3 and, in addition or in the alternative, K2 is preferably less than or equal to 0.001.

The deposition rate (dr) is greater than zero, more preferably equal to or greater than 0.00001, even more preferably equal to or greater than 0.00002, and yet more preferably equal to or greater than 0.00003, g/mm and preferably equal to or less than 0.002, more preferably equal to or less than 0.001, and even more preferably equal to or less than 0.0007, g/mm.

The flow rate of the partially reacted mixture from the nozzle used to deposit the partially reacted mixture and the rate of movement between the nozzle used to deposit the partially reacted mixture and the previously deposited layer may be used to adjust the deposition rate (dr) to a value required by formula (I) or formula (II) for a given elapsed time (t), including values within the aforementioned preferred ranges. The deposition rate (dr) and/or elapsed time (t) may be adjusted by adjusting the flow rate from the extruder and the rate of movement between the nozzle and the previously deposited layer of the three-dimensional object being printed. In a preferred embodiment, the flow rate and/or elapsed time (t) may be adjusted by adjusting the deposition rate (dr) from the extruder and/or rate of movement between the nozzle and the previously deposited layer of the three-dimensional object being printed. The flow rate may also be used to adjust the residence time of the mixture of reactive components in the mixing chamber to produce a bead having a desired viscosity and aspect ratio.

The post gel time width (w) in formula (II) may be adjusted by adjusting the deposition rate and the rate of movement between the nozzle and the previously deposited layer. The relationship between the deposition rate (dr), the rate of movement between the nozzle and the previously deposited layer, and the post gel time width (w) may be determined by printing multiple stacks of layers according to a predetermined 3D object design facilitating post gel time width measurement, such as a cylinder, in which each stack of layers is printed with a single bead of the partially reacted mixture to be used to print the 3D object according to the 3D design at various deposition rates and rates of movement between the nozzle and the previously deposited layer in accordance with formula (II), measuring the horizontal cross-sectional thickness of the stack of layers corresponding to the maximum width of the bead used to print the stack of layers after expiration of the gel time of the bead throughout the stack of layers, determining correlations between the measured post gel time width (w) and the corresponding deposition rate (dr) and rate of movement between the nozzle and the previously deposited layer, respectively, such as by carrying out linear regression analysis, selecting deposition and movement rates corresponding to a desired post gel time width (w) for printing the 3D object according to the 3D design based on the correlation, and carrying out three-dimensional printing according to the 3D design in which smoothness is adjusted according to formula (II) for the selected post gel time width (w).

In a preferred embodiment, the post gel time width of the bead at gel time is at least 0.6 mm, more preferably at least 0.9 mm, and even more preferably at least 1.2 mm, up to 10 mm, more preferably up to 6 mm, even more preferably up to 3 mm, and yet more preferably up to 1.8 mm. In the same, or in an alternative, preferred embodiment, the controller is configured to print, or the method comprises printing, a stack of layers having a height (h) comprising a number of layers (n), wherein w * n / h is greater than or equal to 6 and more preferably greater than or equal to 10.

The height per layer of the deposited partially reacted mixture may be determined by dividing the height of a stack of layers by the number of layers in the stack of layers, wherein the height of the stack of layers is measured at a time equal to or greater than the gel time of the partially reacted mixture used to make the stack of layers, more preferably after postcuring, for all the layers in the stack of layers expressed in millimeters (mm). The height per layer is preferably not greater than 0.3 mm, more preferably not greater than 0.25 mm, and even more preferably not greater than 0.15 mm.

The bead aspect ratio may be adjusted to facilitate obtaining a desired horizontal and vertical 3D print resolution such as by adjusting the flow rate, the deposition rate and/or the rate of movement between the nozzle and the previously deposited layer. The bead aspect ratio, which is preferably measured immediately after deposition of the bead and prior to the elapsed time (t), is preferably less than or equal to 10:1, more preferably less than or equal to 5:1, yet more preferably less than or equal to 3:1, and even more preferably less than or equal to 2:1.

The elapsed time (t) is greater than zero, preferably at least 1 second, more preferably at least 2 seconds, and even more preferably at least 3 seconds, and preferably less than or equal to 60 seconds, more preferably less than or equal to 30 seconds, even more preferably less than or equal to 10 seconds and yet more preferably less than or equal to 9 seconds. In the same, or in an alternative, embodiment, the elapsed time (t) is preferably less than or equal to the gel time of the partially reacted mixture for the printed layer height. In a preferred embodiment, the elapsed time (t) is less than or equal to 0.8, more preferably less than or equal to 0.4, yet more preferably less than or equal to 0.2, and even more preferably less than or equal to 0.1, and preferably at least 0.01, more preferably at least 0.02, even more preferably at least 0.03, and yet more preferably at least 0.04, times the bead gel time.

The gel time of the partially reacted mixture is preferably at least 20 seconds, more preferably at least 40 seconds, and even more preferably at least 60 seconds, up to 600 seconds, more preferably up to 300 seconds, even more preferably up to 120 seconds, more preferably up to 100 seconds, and even more preferably up to 80 seconds. The gel time may be adjusted by adjusting the chemical reactivity of the components in the partially reacted mixture, such as by including components having a functionality having a higher reactivity with other components in the reaction mixture or adding a catalyst when a shorter gel time is desired, and/or by adjusting the temperature of the partially reacted mixture, such as by increasing the ambient temperature in which 3D printing is carried out when a shorter gel time is desired.

For a given print pattern, the rate of movement between the nozzle from which the partially reacted mixture is extruded and the previously deposited layer may be used to adjust the elapsed time (t) whereby the rate of movement between the nozzle and the previously deposited layer at the location of deposition is inversely proportional to the elapsed time (t). The flow rate may be adjusted to maintain a preferred deposition rate at a given rate of movement between the nozzle and the previously deposited layer and the deposition rate may be adjusted in response to changes in elapsed time to maintain K1 and/or K2 within a specified range.

The multiple layers during which the partially reacted mixture is deposited according to formula (I) or according to formula (II), including preferred embodiments thereof, is preferably at least 3 layers, more preferably at least 10 layers, yet more preferably at least 50 layers, and even more preferably at least 100 layers. In a preferred embodiment, the entire stack of layers of the printed three-dimensional object is printed in accordance with formula (I) or according to formula (II), including preferred embodiments thereof. In one preferred embodiment, the aforementioned stacks of layers, including the preferred numbers of layers in the respective stack, are printed according to formula (I) and/or formula (II) at a K1 and/or K2 value, respectively, within a range corresponding to a selected smoothness level over the stack of layers to obtain a 3D object having a certain smoothness level over the height of the stack of layers. In another preferred embodiment, the aforementioned stacks of layers, including the preferred numbers of layers in the respective stack, are printed according to formula (I) and/or formula (II) at K1 and/or K2 values, respectively, which are adjusted to correspond to different smoothness levels over the height of the stack of layers to obtain a 3D object having smoothness levels which vary over the height of the stack of layers.

The reactive components used to make the partially reacted mixture comprise at least a first reactive component and a second reactive component, wherein the first reactive component comprises a first organic substance and the second reactive component comprises a second organic substance, wherein the second organic substance is capable of reacting with the first organic substance to form a covalently bonded polymeric network having the properties of a thermoset material.

The first organic substance preferably has at least two functional groups and the second organic substance preferably has at least two functional groups, wherein the functional groups of the second organic substance are capable of reacting with the functional groups of the first organic substance to form covalent bonds. In a preferred embodiment, the functional groups of the first organic substance are preferably isocyanate groups and the functional groups of the second organic substance preferably comprise alcoholic hydroxy groups and/or primary or secondary amine groups. Systems, methods and formulations for printing three-dimensional objects comprising a thermoset polyurethane material are known. Examples include the systems, methods and formulations disclosed in U.S. patent nos. 10,639,842, 11,065,816, 11,254,047, and 11,724,458, each of which are hereby incorporated herein by reference for their relevant disclosures.

In a preferred embodiment, the first organic substance and/or the second organic substance is a prepolymer formed by reacting the first organic substance with the second organic substance. When the functional groups of the first organic substance comprise at least two isocyanate groups, the prepolymer preferably comprises at least two urethane groups or at least two urea groups.

In a preferred embodiment, the first organic substance is a polyisocyanate prepolymer and the second organic substance is a polyol prepolymer. The expression, "polyisocyanate prepolymer" refers to a prepolymer having at least two isocyanate groups and at least two urethane linking groups, wherein each isocyanate group is capable of reacting with an hydroxy group of a compound having an hydroxy group to form a another urethane linking group. The expression, "polyol prepolymer" refers to a prepolymer having at least two hydroxy groups and at least two urethane linking groups, wherein each hydroxy group is capable of reacting with an isocyanate group of a compound having an isocyanate group to form an additional urethane linking group. The polyisocyanate prepolymers and the polyol prepolymers are copolymers comprising units derived from at least one polyisocyanate compound and units derived from at least one polyol compound. The expression "polyisocyanate compound" refers to a compound having at least two isocyanate groups and less than two urethane linking groups, wherein each isocyanate group is capable of reacting with an hydroxy group of a compound having an hydroxy group to form a urethane linking group. The expression "polyol compound" refers to a compound having at least two hydroxy groups and less than two urethane linking groups, wherein each hydroxy group is capable of reacting with an isocyanate group of a compound having an isocyanate group to form a urethane linking group. The at least one polyisocyanate compound is preferably a diisocyanate compound and the at least one polyol compound is preferably a diol compound. The polyisocyanate prepolymers are preferably isocyanate-terminated and the polyol prepolymers are preferably hydroxy-terminated.

Examples of polyisocyanate compounds that may be used to make the prepolymers include, but are not limited to, methylene diphenyl diisocyanate (MDI) and toluene diisocyanate (TDI). Examples of MDI include, but are not limited to, monomeric MDI, polymeric MDI, and isomers thereof. Examples of isomers of MDI having the chemical formula $C_{15}H_{10}N_2O_2$ include, but are not limited to, 2,2'-MDI, 2,4'-MDI, and 4,4'-MDI, and mixtures thereof. An example of 4,4'-methylene diphenyl diisocyanate is Lupranate™ M and an example of a mixture of 2,4'-MDI, and 4,4'-MDI is Lupranate™ MI, each of which is available from BASF Wyandotte, Michigan, USA. Examples of isomers of TDI having the chemical formula $C_9H_6N_2O_2$ include, but are not limited to, 2,4-TDI and 2,6-TDI.

Other examples of polyisocyanate compounds include, but are not limited to, monomeric diisocyanates and blocked polyisocyanates. Examples of monomeric diisocyanates include, but are not limited to, hexamethylene diisocyanate (HDI), methylene dicyclohexyl diisocyanate or hydrogenated MDI (HMDI), and isophorone diisocyanate (IPDI). One example of a HDI is hexamethylene-1,6-diisocyanate. One example of a HMDI is dicyclohexylmethane-4,4'diisocyanate. Blocked polyisocyanates are typically based on HDI or IDPI. Examples of blocked polyisocyanates include, but are not limited to, HDI trimer, HDI biuret, HDI uretidione, and IPDI trimer.

Further examples of polyisocyanate compounds that can be used for producing the prepolymers described herein include, but are not limited to, aromatic diisocyanates, such as a mixture of 2,4- and 2,6-tolylene diisocyanates (TDI), naphthalene-1,5-diisocyanate (NDI), 3,3'-dimethyl-4,4'-biphenylene diisocyanate (TODI), crude TDI, polymethylenepolyphenyl isocyanurate, crude MDI, xylylene diisocyanate (XDI) and phenylene diisocyanate; aliphatic diisocyanates, such as 4,4'-methylene-biscyclohexyl diisocyanate (hydrogenated MDI), hexamethylene diisocyanate (HMDI), isophorone diisocyanate (IPDI) and cyclohexane diisocyanate (hydrogenated XDI); and modified products thereof, such as isocyanurates, carbodiimides and allophanamides.

In a preferred embodiment, the polyol compound comprises one or more ether groups, ester groups or carbonate groups, or a combination thereof. In a more preferred embodiment, the polyol compound comprises multiple ether groups, multiple ester groups or multiple carbonate groups.

Examples of polyether polyols include, but are not limited to, those obtained by polymerization of an oxide such as ethylene oxide, propylene oxide, or butylene oxide from an initiator such as glycerol, di-propylene glycol, TPG (tripropylene glycol), castor oil, sucrose, or sorbitol. Examples of polyether polyols include polyalkylene oxide polyether polyols synthesized through the self-polymerization of oxiranes such as propylene oxide (an addition reaction) that is initiated by a polyol with low molecular weight, such as glycerol. Examples include polypropylene glycol and polytetramethylene glycol.

Preferred polyol compounds comprising ester groups include dimers, trimers, polymers and copolymers, wherein one or more monomer units comprise at least one ester group, such as polyester polyols. Polyester polyols may be obtained by condensation of one or more acids, or their anhydrides, and one or more compounds having at least two primary or secondary hydroxy groups. Specific examples include polyester polyols made from phthalic anhydride and di-ethylene glyol, phthalic anhydride and di-propylene glycol, adipic acid and butane diol, or succinic acid and butane or hexane diol.

Preferred polyol compounds comprising ester groups include lactones, such as valerolactone, butyrolactone, and caprolactone, particularly lactones selected from $\delta$-valerolactone, $\gamma$-butyrolactone, $\epsilon$-caprolactone, $\epsilon$-methyl-$\epsilon$-caprolactone and $\xi$-enantholactone and polymers and copolymers thereof. Examples of preferred polyester polyols include $\delta$-valerolactone and/or $\epsilon$-caprolactone. In a preferred embodiment, the ester groups are caprolactones such as $\epsilon$-caprolactone and $\epsilon$-methyl-$\epsilon$-caprolactone, and polymers and copolymers thereof. Methods for making suitable polylactones are disclosed in Binczak et al., Recent Developments in Lactone Monomers and Polymer Synthesis and Application, Materials (MDPI, 2021) 14, p. 2881, which is hereby incorporated herein by reference for its relevant disclosure.

Preferred polyol compounds comprising carbonate groups include dimethyl carbonate (DMC), aliphatic carbonates such as diethyl carbonate and methyl ethyl carbonate, cyclic carbonates such as ethylene carbonate, propylene carbonate (4-methyl-1,3-dioxolan-2-one, trimethylene carbonate), butylene carbonate (4-ethyl-1,3-dioxolan-2-one, tetramethylene carbonate), and 5-methyl-1,3-dioxan-2-one, and aromatic carbonates such as diphenyl carbonate (DPC) and dimers, trimers, polymers and copolymers thereof. In certain embodiments, DMC, diethyl carbonate and ethylene carbonate, and dimers, trimers, polymers and copolymers thereof, are more preferred.

**Additional components**

The system and method according to this invention may comprise additional components. Examples of additional components include amine chain extenders, additional prepolymers, components which facilitate the reaction between the first reactive component and the second reactive component, such as additional chain extenders, additional crosslinking agents, additional polyisocyanate compounds, catalysts, components that modify or enhance mixing or extrusion of the reaction mixture, such as wetting agents, defoaming agents, viscosity modifiers, surfactants, and processing aids, and components which modify or enhance the properties or appearance of the thermoset polyurethane material made by the system and method according to this invention, such as fillers, UV absorbers, hindered amine light stabilizers, optical brighteners, and coloring agents. The additional components may be incorporated into one or more of the above-specified reactive components to the extent that they do not react with the materials in the selected reactive component prior to the mixing step or they may be introduced into the mixing step separately. Additional components capable of reacting with polyol groups are preferably combined with the first reactive component to form a composition which is introduced into the mixer for mixing with the second reactive composition prior to printing. Additional components capable of reacting with isocyanate groups are preferably combined with the second reactive component to form a composition which is introduced into the mixer for mixing with the first reactive composition prior to printing.

**Post-curing**

Post-curing is a process that involves exposing a printed polyurethane part to elevated temperatures in an oven to speed up and complete the cure of the printed material. Unless stated otherwise, each printed formulation is post-cured overnight at 80 to 120 °C.

**Method used to measure surface smoothness**

The approach used herein for measuring the surface smoothness of three-dimensional objects is to visually compare the surface of the printed three-dimensional object with an object having a known surface smoothness and photographic renditions of three-dimensional objects printed at various smoothness levels. This approach is illustrated by Figs. 1 to 8 in which photographs of a plan view of the surface of printed cylinders (2) having a diameter of 70 mm are shown together with a standard M3 threaded metal bolt (1) having a diameter of 3 mm and thread pitch of 0.5. A smoothness rating may be assigned to three-dimensional objects made by printing a stack of layers according to a three-dimensional design by visually comparing the printed three-dimensional object with the respective figures while using a standard M3 threaded bolt to standardize the scale of the comparison. The smoothness level is selected based on which one of Figs. 1 to 8 corresponds most closely to the surface of the printed three-dimensional object.

## EXAMPLES

The following examples are provided for illustration only. They are not intended to limit the scope of the invention as set forth in the claims which follow.

### *Materials*

First reactive component (A-side, **1**)

627.4 g of melted Lupranate™ M was added to a reactor vessel having a 4 liter capacity with nitrogen gas blanketing and stirring at a temperature maintained at 80 °C. 0.4 g 4-nitrobenzoyl chloride (Millipore-Sigma, Milwaukee, Wisconsin, USA) was added to the reactor followed by 0.14 g phosphoric acid (Millipore-Sigma, Milwaukee, Wisconsin, USA). 1680 g Pluracol 2010 (BASF), was added to the reactor vessel and the reaction was stirred for 1h. 717.4g of Pluracol 2010 (BASF) was added into the reaction vessel, and stirred for 24h. 54 g of 1,4-butane diol (BDO) was added to the reactor and stirred for 7h. 459.4 g of Lupranate™ MI and 459.4 g of Lupranate™ M were added to the reactor and the reactor continued to be mixed under nitrogen gas blanket at 80 °C for 15 hours to yield isocyanate-terminated prepolymer (**1**).

Second reactive component (B side, **2**)

1935 g of hydroxy-terminated prepolymer (**3**) was added to a reactor vessel having a 4 liter capacity with nitrogen gas blanketing and an overhead stirrer. 1385 g of Pluracol 726 (BASF), 195 g of Ethacure 100, 280 g of Ethacure 300, 80 g of a 50:50 BDO:Trimethylol propane (TMP) mixture, 40 g of K KAT XK-618, 10 g of Eversorb 93, and 5 g of BYK 1790, and 80 g of UVO black were added into the reactor vessel. The mixture was stirred for 2h at 70 °C to yield **2.**

The hydroxy-terminated prepolymer (**3**) was obtained as follows:
1632.6 g of Pluracol 2010 (BASF) was added to a reactor vessel having a 2 liter capacity with nitrogen gas blanketing and stirring at a temperature maintained at 80 °C. 0.28 g 4-nitrobenzoyl chloride (Millipore-Sigma, Milwaukee, Wisconsin, USA) was added to the reactor followed by 0.08 g phosphoric acid (Millipore-Sigma, Milwaukee, Wisconsin, USA). 306.5 g of melted Lupranate™ M was added to the reactor vessel and the reaction was stirred for 24h. 60.55 g of 1,4-butane diol (BDO) was added to the reactor and stirred under nitrogen gas blanket at 80 °C for 24h to yield **3.**

### *Printing equipment and settings*

A partially reacted thermosettable material was extruded by pumping the A-side formulation and the B-side formulation using a Viscotec 2K Vipro 5/5 pair of pumps connected via conduits to a Sulzer MKH 02-16S static mixer. The A-side formulation was introduced into the first pump and B-side formulation was introduced into the second pump. The A-side formulation and the B-side formulation were each introduced to the low pressure side of the respective pump using a 600 mL syringe while applying 75 to 100 psi (0.52 to 0.689 MPa) air pressure to the syringe during extrusion of the respective resin to apply continuous pressure on the resin in the syringe in excess of atmospheric pressure. The mixing chamber was a helix-type static mixer having at least 12 fixed mixing elements and a conical extrusion end, which served as a nozzle. The conical extrusion end had an opening for extrusion with a diameter of 0.7 mm. The gel time of the extruded mixture measured according to ASTM D2471-99, paras. 7.7 and 7.8, was 71 seconds.

### *Test runs*

A first series of cylinders having a diameter of 70 mm were each printed with a single spirally printed bead of partially reacted mixture at a fixed elapsed time (t) and varying deposition rates (dr) according to the conditions shown in Table 1 below.

Table 1

| Run | Flow Rate (g/s) | Movement (mm/min.) | Deposition Rate (g/mm) | Elapsed Time (seconds) |
|-----|-----------------|--------------------|-----------------------|------------------------|
| 1   | 0.0099          | 2,208              | 0.00027               | 5.9                    |

(continued)

| Run | Flow Rate (g/s) | Movement (mm/min.) | Deposition Rate (g/mm) | Elapsed Time (seconds) |
|---|---|---|---|---|
| 2 | 0.0199 | 2,208 | 0.00054 | 5.9 |
| 3 | 0.0397 | 2,208 | 0.00108 | 5.9 |
| 4 | 0.0597 | 2,211 | 0.00162 | 5.9 |

A second series of cylinders having a diameter of 70 mm were each printed with a single spirally printed bead of partially reacted mixture at a fixed deposition rate (dr) and varying elapsed time (t) according to the conditions shown in Table 2 below.

Table 2

| Run | Flow Rate (g/s) | Movement (mm/min.) | Deposition Rate (g/mm) | Elapsed Time (seconds) |
|---|---|---|---|---|
| 5 | 0.0792 | 4,398 | 0.00108 | 2,95 |
| 6 | 0.0681 | 3,781 | 0.00108 | 3.45 |
| 7 | 0.0530 | 2,944 | 0.00108 | 4.42 |
| 8 | 0.0239 | 1,327 | 0.00108 | 9.87 |

After printing was completed, the cylinders made according to Tables 1 and 2 were post-cured overnight at 80 to 120 °C. The wall thickness of each cylinder was measured to determine the post gel time width value (w), the number of layers for a given height of the cylinder was determined to calculate the average layer height and smoothness was evaluated on a scale of 1 to 8 by visually comparing each cylinder with the standards shown in Figs. 1 to 8 in which the superimposed bolt (1) used as a reference for scale relative to the printed cylinder (2) has a diameter of 3 millimeters and a thread pitch of 0.5. The results are shown in Table 3 below.

Table 3

| Run | Layer Height (mm) | Thickness (w) (mm) | $-0.75*\ln(dr*t^3)$ | dr*t/w | Smoothness Rating |
|---|---|---|---|---|---|
| 1 | 0.14 | 2.03 | +2.17 | 0.0008 | 8 |
| 2 | 0.19 | 2.64 | +1.64 | 0.0012 | 7 |
| 3 | 0.27 | 3.83 | +1.13 | 0.0017 | 7 |
| 4 | 0.32 | 4.63 | +0.82 | 0.0021 | 5 |
| 5 | 0.16 | 5.91 | +2.69 | 0.0005 | 8 |
| 6 | 0.19 | 5.18 | +2.34 | 0.0007 | 8 |
| 7 | 0.22 | 4.59 | +1.78 | 0.0010 | 8 |
| 8 | 0.34 | 3.09 | -0.03 | 0.0034 | 5 |

As can be seen in the above data, cylinders printed in accordance with the values generated by formula (I) or formula (II) have corresponding smoothness ratings. Selecting combinations of deposition rates and layer times having higher values for K1 or lower values for K2 resulted in printed cylinders having consistently higher smoothness ratings than cylinders made with deposition rates and layer times generating lower K1 values or higher K2 values . The correlation with smoothness is evident regardless of whether the deposition rate is varied while maintaining a constant elapsed time as in Runs 1 to 4 or elapsed time is varied while maintaining a constant deposition rate as in Runs 5 to 8, which demonstrates that the deposition rate and elapsed time each contribute to the smoothness level of the printed object in accordance with formulae (I) and (II).

Claims

1.  A system for printing a three-dimensional object comprising a thermoset material having a selected smoothness over multiple stacked layers via reactive extrusion comprising:

a mixing chamber for mixing at least two reactive components to form a partially reacted mixture of the at least two reactive components,

a first pump in fluid communication with the mixing chamber for pumping a first composition comprising one or more reactive components into the mixing chamber at a controllable pumping rate,

a second pump in fluid communication with the mixing chamber for pumping a second composition into the mixing chamber at a controllable pumping rate,

wherein the second composition comprises one or more reactive components capable of reacting with the one or more reactive components of the first composition,

a downwardly-oriented nozzle having a first end connected to, and in fluid communication with, the mixing chamber and a second end below the first end for extruding the partially reacted mixture received from the mixing chamber,

a dynamic positioning apparatus capable of providing controllable relative movement in three dimensions between the second end of the nozzle and

coordinates associated with printing a three-dimensional object according to a three-dimensional object design and

a controller comprising one or more digital electronic processors, wherein the controller is operably coupled with (a) the first pump and the second pump to control the pumping rates of the first pump and the second pump and (b) the dynamic positioning apparatus to control relative movement in three dimensions between the second end of the nozzle and coordinates associated with printing a three-dimensional object according to a three-dimensional object design,

wherein the controller is configured to print a three-dimensional object comprising a stack of layers of partially reacted thermosettable material by depositing each layer of the partially reacted thermosettable material on top of a previously deposited layer of the partially reacted thermosettable material to form the stack of layers having a height in a vertical direction according to a three-dimensional object design, wherein each layer of the partially reacted mixture is deposited on a previously deposited layer of the stack of layers at deposition rate (dr) in grams per millimeter relative movement between the nozzle and the previously deposited layer of the partially reacted mixture and at elapsed time (t) in seconds between the time of extrusion of the previously deposited layer at a location in the previously deposited layer and the time of deposition of the partially reacted mixture onto the previously deposited layer at the same location to form the next subsequent layer in the stack of layers, wherein the deposition rate (dr) and the elapsed time (t) are maintained in accordance with formula (I) or formula (II), or both formula (I) and formula (II), while depositing multiple layers of the stack of layers:

$$-0.75 * \ln(dr * t^3) = K1 \qquad (I)$$

or

$$(dr * t) / w = K2 \qquad (II),$$

wherein

dr represents the rate of deposition of the partially reacted mixture in grams per millimeter,
t represents the elapsed time in seconds,
w represents the maximum cross-sectional post gel time width in millimeters of a bead of extruded partially reacted mixture deposited according to the three-dimensional object design.
K1 represents a value selected to correspond to the degree of desired smoothness over multiple stacked layers and
K2 represents a value selected to correspond to the degree of desired smoothness over multiple stacked layers for a predetermined post gel time width of the deposited partially reacted mixture at the gel time of the deposited partially reacted mixture.

2. A method for printing a three-dimensional object comprising a thermoset material having a selected smoothness over multiple stacked layers via reactive extrusion comprising:

(c) Mixing a first composition comprising one or more reactive components with a second composition comprising one or more reactive components capable of reacting with the one or more reactive components of the first composition to form a partially reacted mixture and
(d) Extruding the partially reacted mixture formed in step (a) through a downwardly oriented nozzle onto a substrate while causing relative movement between the downwardly oriented nozzle and the extruded partially reacted mixture deposited on the substrate to form a three-dimensional object,

wherein step (b) comprises depositing the partially reacted mixture extruded in step (b) in the form of a bead of partially reacted mixture deposited on a previously deposited layer in layers such that each layer of the partially reacted thermosettable material is deposited on top of a previously deposited layer of the partially reacted thermosettable material to form a stack of layers having a height in a vertical direction according to a three-dimensional object design, wherein each layer of the partially reacted mixture is deposited on a previously deposited layer of the stack of layers at deposition rate (dr) in grams per millimeter relative movement between the downwardly-oriented nozzle and the previously deposited layer of the partially reacted mixture and at elapsed time (t) in seconds between the time of extrusion of the previously deposited layer at a location in the previously deposited layer and the time of deposition of the partially reacted mixture onto the previously deposited layer at the same location to form the next subsequent layer in the stack of layers, wherein the deposition rate (dr) and the elapsed time (t) are maintained in accordance with formula (I) or formula (II), or both formula (I) and formula (II), while depositing multiple layers of the stack of layers:

$$-0.75 * \ln(dr * t^3) = K1 \qquad (I)$$

or

$$(dr * t) / w = K2 \qquad (II),$$

wherein

dr represents the rate of deposition of the partially reacted mixture in grams per millimeter,
t represents the elapsed time in seconds,
w represents the maximum cross-sectional post gel time width in millimeters of a bead of extruded partially reacted mixture deposited according to the three-dimensional object design,
K1 represents a value selected to correspond to the degree of desired smoothness over multiple stacked layers, and
K2 represents a value selected to correspond to the degree of desired smoothness over multiple stacked layers for a predetermined post gel time width of the deposited partially reacted mixture at the gel time of the deposited partially reacted mixture.

3.  The system or method according to claim 1 or 2, wherein K1 represents a value greater than or equal to 1 and K2 represents a value less than or equal to 0.002.

4.  The system or method according to claim 1 or 2, wherein K1 represents a value greater than or equal to 2 and K2 represents a value less than or equal to 0.001.

5.  The system or method according to any one of the preceding claims, wherein the deposition rate, dr, is less than or equal to 0.001 gram per millimeter.

6.  The system or method according to any one of the preceding claims, wherein the deposition rate, dr, is greater than or equal to 0.00001 gram per millimeter.

7.  The system or method according to any one of the preceding claims, wherein the elapsed time, t, is less than or equal to 600 seconds.

8.  The system or method according to any one of the preceding claims, wherein the partially reacted mixture has a gel time and the elapsed time, t, is less than or equal to 0.8 times the gel time of the partially reacted mixture.

9.  The system or method according to any one of the preceding claims, wherein the controller is configured to print, or the method comprises printing, a stack of layers comprising at least 3 sequential layers in accordance with formula (I) or formula (II), or both formula (I) and formula (II).

10. The system or method according to any one of the preceding claims, wherein the controller is configured to print, or the method comprises printing, a stack of layers having a height (h) comprising a number of layers (n), wherein w * n / h is greater than or equal to 6.

11. The system or method according to any one of the preceding claims, wherein the controller is configured to print, or the method comprises printing, a stack of layers having a height (h) comprising a number of layers (n), wherein w * n / h is greater than or equal to 10.

12. The system or method according to any one of the preceding claims, wherein the first reactive component comprises a first organic substance and the second reactive component comprises a second organic substance, wherein the second organic substance is capable of reacting with the first organic substance to form a covalently bonded polymeric network having the properties of a thermoset material.

13. The system or method according to claim 12, wherein the first organic substance has functional groups, wherein the functional groups of the first organic substance comprise isocyanate groups and the second organic substance has functional groups, wherein the functional groups of the second organic substance comprise alcoholic hydroxy groups or primary or secondary amine groups.

14. The system or method according to claim 12 or 13, wherein the first reactive component comprises a polyisocyanate compound or prepolymer having at least two reactive isocyanate groups per molecule and the second reactive component comprises a polyol compound or prepolymer having at least two reactive hydroxy groups per molecule.

15. The system or method according to claim 14, wherein the first reactive component comprises a polyisocyanate prepolymer having at least two urethane groups and two primary or secondary isocyanate groups per molecule and the second reactive component comprises a polyol prepolymer having at least two urethane groups and at least two primary or secondary hydroxy groups per molecule.

16. The system or method according to claim 15, wherein at least one of the polyisocyanate prepolymer and the polyol prepolymer further comprises at least one ether group, at least one ester group or at least one carbonate group per molecule.

17. The system or method according to any one of claims 12 to 16, wherein the second reactive component further comprises a polyol compound having less than two urethane groups per molecule, wherein the polyol compound comprises at least one ester group or at least one carbonate group per molecule.

18. The system or method according to any one of claims 12 to 17, wherein the second reactive component further comprises an amine chain extender.

**Fig. 1**

**Fig. 2**

**Fig. 3**

**Fig. 4**

Fig. 5

Fig. 6

**Fig. 7**

**Fig. 8**

Europäisches
Patentamt

European
Patent Office

Office européen
des brevets

# EUROPEAN SEARCH REPORT

**Application Number**

EP 24 17 0639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>A | US 10 639 842 B2 (CHROMATIC 3D MAT INC [US]) 5 May 2020 (2020-05-05)<br>* figure 7 *<br>* column 1, line 36 - line 38 *<br>* column 2, line 5 - line 8 *<br>* column 3, line 40 - line 43 *<br>* example 6 *<br>* claims 1,3,,4 *<br>----- | 1,2,5-8, 10-18<br>3,4,9 | INV.<br>B29C64/106<br>B29C64/393<br>B33Y10/00<br>B33Y50/02 |
| X | WO 2022/115638 A2 (CHROMATIC 3D MAT INC [US]) 2 June 2022 (2022-06-02)<br>* paragraph [0044] - paragraph [0045] *<br>* paragraph [0062] *<br>* claims 1,5,10,13 *<br>----- | 1,2 | |
| X | US 2023/271381 A1 (GARROD MICHAEL [US] ET AL) 31 August 2023 (2023-08-31)<br>* abstract *<br>* paragraph [0032] - paragraph [0033] *<br>* paragraph [0069] - paragraph [0070] *<br>* paragraph [0121] - paragraph [0125] *<br>----- | 2 | |
| | | | **TECHNICAL FIELDS SEARCHED (IPC)**<br><br>B29C<br>B33Y |

The present search report has been drawn up for all claims

| Place of search | Date of completion of the search | Examiner |
|---|---|---|
| The Hague | 26 September 2024 | Lozza, Monica |

EPO FORM 1503 03.82 (P04C01)

## ANNEX TO THE EUROPEAN SEARCH REPORT
## ON EUROPEAN PATENT APPLICATION NO.

EP 24 17 0639

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | | Publication date | Patent family member(s) | | Publication date |
|---|---|---|---|---|---|
| US 10639842 | B2 | 05-05-2020 | NONE | | |
| WO 2022115638 | A2 | 02-06-2022 | CN | 116761710 A | 15-09-2023 |
| | | | EP | 4251403 A2 | 04-10-2023 |
| | | | KR | 20230110774 A | 25-07-2023 |
| | | | WO | 2022115638 A2 | 02-06-2022 |
| US 2023271381 | A1 | 31-08-2023 | US | 2023271381 A1 | 31-08-2023 |
| | | | WO | 2022031639 A1 | 10-02-2022 |

EPO FORM P0459

For more details about this annex : see Official Journal of the European Patent Office, No. 12/82

**EP 4 635 717 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10639842 B
- US 11065816 B
- US 11254047 B
- US 11724458 B

**Non-patent literature cited in the description**

- **BINCZAK et al.** Recent Developments in Lactone Monomers and Polymer Synthesis and Application. *Materials*, 2021, vol. 14, 2881